# FASCICULE DE BREVET EUROPEEN

(11) **EP 0 403 327 B1**
(45) Date de publication et mention de la délivrance du brevet: **27.07.1994**
(21) Numéro de dépôt: 90401412.3
(22) Date de dépôt: 28.05.1990
(51) Int. Cl.: G21D 1/02, B23K 9/028

(54) **Procédé et dispositif de remplacement d'une canne chauffante d'un pressuriseur d'un réacteur nucléaire à eau sous pression**
Verfahren und Vorrichtung für das Ersetzen eines Heizstabes eines Druckerzeugers eines Wasserkernreaktors
Method and device for the replacement of a heaterstick of a PWR pressurizer

(30) Priorité: 12.06.1989 FR 8907725
(43) Date de publication de la demande: 19.12.1990
(73) Titulaire: FRAMATOME, 92400 Courbevoie (FR)
(72) Inventeur: Gente, Daniel, F-69100 Villeurbanne (FR); Giron, Marcel, F-69980 Anse (FR)
(74) Mandataire: Bouget, Lucien

(56) Documents cités:
- WO-A-86/04281
- DE-A- 2 060 988
- FR-A- 2 540 575
- GB-A- 888 946
- US-A- 3 194 937

## Description

L'invention concerne un procédé et un dispositif de remplacement d'une canne chauffante d'un pressuriseur d'un réacteur nucléaire à eau sous pression.

Les réacteurs nucléaires à eau sous pression comportent un circuit primaire dans lequel l'eau de refroidissement du réacteur est maintenue à une forte pression de l'ordre de 155 bars, grâce à un pressuriseur disposé sur l'une des branches du circuit primaire.

Le pressuriseur permet de maintenir la pression dans le circuit primaire entre certaines limites déterminées, soit par aspersion, lorsque la pression a tendance à dépasser la limite supérieure admise, soit par chauffage électrique du fluide primaire, lorsque la pression a tendance à descendre en-dessous de la valeur inférieure admise. Ces opérations sont effectuées à l'intérieur du pressuriseur qui comporte en particulier une enveloppe ayant un fond bombé par lequel on introduit des cannes de chauffage électriques à l'intérieur du pressuriseur.

Des manchettes de traversée sont fixées par soudage sur le fond du pressuriseur, chacune au niveau d'une ouverture de traversée. Les cannes chauffantes sont introduites dans les manchettes et soudées à leur extrémité, de manière à assurer la tenue mécanique et l'étanchéité de la liaison.

Les cannes chauffantes sont réalisées sous la forme de doigts de gant renfermant les résistances de chauffage et comportant une extrémité ouverte au niveau de l'extrémité extérieure de la manchette de traversée, pour assurer le branchement et l'alimentation des résistances électriques.

Certaines cannes chauffantes peuvent devenir défectueuses en service, si bien qu'il est nécessaire de contrôler périodiquement leur bon état de fonctionnement.

Dans le cas où l'on a détecté la présence d'une canne défectueuse, on effectue son remplacement de manière à continuer à assurer un fonctionnement satisfaisant du pressuriseur.

De manière générale, le remplacement d'une canne de chauffage d'un pressuriseur est réalisé par une suite d'opérations successives comportant en particulier le tronçonnage de la manchette, l'extraction de la canne défectueuse, le nettoyage et l'usinage de l'extrémité découpée de la manchette, la mise en place d'une canne de remplacement, la fixation provisoire de cette canne sur la manchette par points de soudure et la fixation définitive de la canne par réalisation d'une soudure circulaire continue assurant la jonction entre la canne et l'extrémité de la manchette. Différentes opérations de contrôle doivent être effectuées entre les phases opératoires citées ci-dessus.

Les opérations de soudage sont réalisées par procédé TIG, le cordon de soudage continu entre la canne et la manchette étant réalisé en plusieurs passes, grâce à une machine automatique assurant la fusion d'un fil en métal fusible.

Une telle installation de soudage TIG automatique avec métal fusible est extrêmement encombrante et difficile à mettre en oeuvre pour réaliser la jonction par soudage de pièces tubulaires de faible diamètre telles qu'une canne chauffante et une manchette de traversée d'un pressuriseur.

Le but de l'invention est donc de proposer un procédé de remplacement d'une canne chauffante d'un pressuriseur d'un réacteur nucléaire à eau sous pression introduite et fixée par soudage dans une manchette solidaire de l'enveloppe du pressuriseur, au niveau d'une ouverture de traversée de cette enveloppe, consistant à tronçonner la manchette au-dessus de la soudure de raccordement de la canne chauffante, à extraire la canne chauffante, à mettre en place une canne chauffante de remplacement, à fixer cette canne de manière provisoire sur la manchette et à réaliser une soudure annulaire continue de jonction entre la canne chauffante et la manchette, ce procédé pouvant être mis en oeuvre de manière simple et rapide, en évitant en particulier de nombreuses opérations de contrôle.

Dans ce but, pour réaliser la soudure continue entre la canne et la manchette, on fixe un arbre de forme tubulaire sur une extrémité de la canne chauffante saillante par rapport à la manchette et dans son prolongement, on engage et on fixe sur l'arbre tubulaire, en position de soudage, un dispositif de soudage comportant un support tubulaire, une torche de soudage orbital sous gaz inerte avec électrode en métal fusible montée rotative autour de l'axe du support confondu avec l'axe de la canne chauffante et munie d'un moyen moteur de mise en rotation et un dérouleur de fil de soudage monté rotatif sur un socle fixe autour de l'axe de la canne chauffante et muni de moyens moteurs et qu'on met en rotation de manière synchrone la torche de soudage et le dérouleur autour de l'axe de la canne chauffante, de manière à réaliser le soudage en une seule passe, sur toute la périphérie de la canne chauffante et de la manchette.

Afin de bien faire comprendre l'invention, on va maintenant décrire, en se référant aux figures jointes en annexe, un mode de réalisation d'un dispositif de soudage permettant de mettre en oeuvre le procédé de remplacement d'une canne chauffante de pressuriseur suivant l'invention.

La figure 1 est une vue d'ensemble en perspective d'un dispositif de soudage en position de service pour la soudure d'une canne chauffante d'un pressuriseur d'un réacteur nucléaire à eau sous pression.

La figure 2 est une vue en perspective du détail 2 de la figure 1 montrant la torche de soudage et son support.

La figure 3 est une vue en élévation avec coupe partielle de la torche de soudage.

La figure 4 est une vue en élévation et en coupe partielle du dérouleur de fil associé à la torche de soudage.

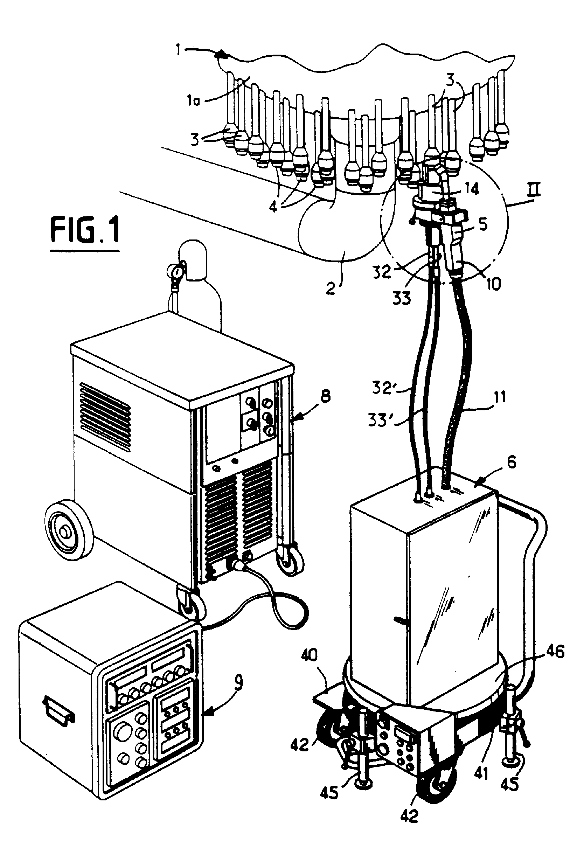

Sur la figure 1, on voit le fond bombé 1a de l'enveloppe 1 d'un pressuriseur d'un réacteur nucléaire à eau sous pression. Le fond bombé 1a est traversé à sa partie centrale par une canalisation de grande section 2 permettant de relier le pressuriseur au circuit primaire du réacteur.

Des manchettes 3 sont fixées par soudure sur le fond du pressuriseur chacune au niveau d'une ouverture de traversée du fond 1a, de manière à assurer le passage d'une canne chauffante 4 pénétrant à l'intérieur de l'enveloppe 1 du pressuriseur.

Pendant le fonctionnement du réacteur, les cannes chauffantes 4 sont alimentées en courant électrique de façon à maintenir la pression du fluide primaire au-dessus d'une valeur limite minimale déterminée.

Sur la figure 1, le pressuriseur a été représenté au cours d'une opération d'entretien et de réparation consistant à remplacer une canne chauffante 4 fixée par soudure sur une manchette de traversée 3.

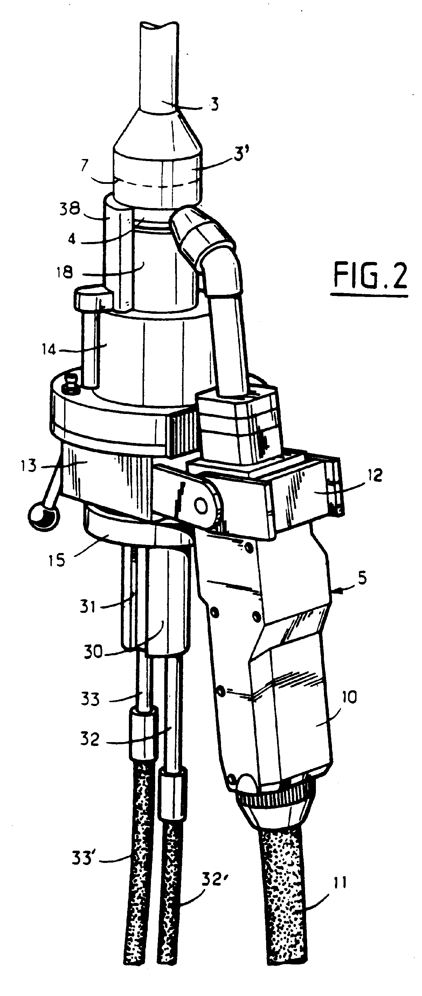

Les manchettes 3, comme il est visible sur la figure 2, comportent une partie inférieure à grand diamètre 3′ reliée à la partie courante de traversée de la manchette par une partie tronconique.

La canne chauffante 4 introduite dans la manchette 3 comporte une partie inférieure saillante par rapport à la partie inférieure 3′ de la manchette, en-dessous de la soudure de raccordement.

Le démontage de la canne chauffante 4 est réalisé par tronçonnage de la partie à grand diamètre 3′ de la manchette 3, au-dessus de la soudure de raccordement de la canne chauffante 4.

Sur la figure 2, on a représenté en pointillés une ligne de découpage 7 permettant de séparer une canne chauffante 4 de la manchette correspondante.

Après découpage de la manchette, la canne 4 est extraite par glissement axial à l'intérieur de la manchette.

On réalise alors un nettoyage de l'extrémité découpée de la manchette 3 suivant laquelle on doit réaliser la fixation d'une canne chauffante de remplacement.

Dans le cas du procédé suivant l'invention, la canne chauffante de remplacement est introduite directement dans la manchette découpée puis fixée de manière provisoire par procédé TIG, par des points de soudure réalisés manuellement.

On effectue alors un contrôle de la position de la canne chauffante avant de réaliser sa fixation définitive par réalisation d'un joint de soudure annulaire joignant la canne chauffante à l'extrémité de la manchette.

Cette opération de soudage orbital est réalisée en utilisant le dispositif qui sera décrit en se référant à l'ensemble des figures.

Sur la figure 1, on voit l'ensemble du dispositif de soudage qui comporte une torche de soudage 5 représentée en position de service à la partie inférieure d'une manchette 3, un coffret d'alimentation 6 de la torche de soudage, un poste de commande 9 et un ensemble 8 de fourniture du courant électrique de soudage et du gaz inerte.

Le poste de conduite 9 et l'ensemble 8 sont constitués par des matériels courants utilisés dans le cas du soudage électrique sous gaz inerte.

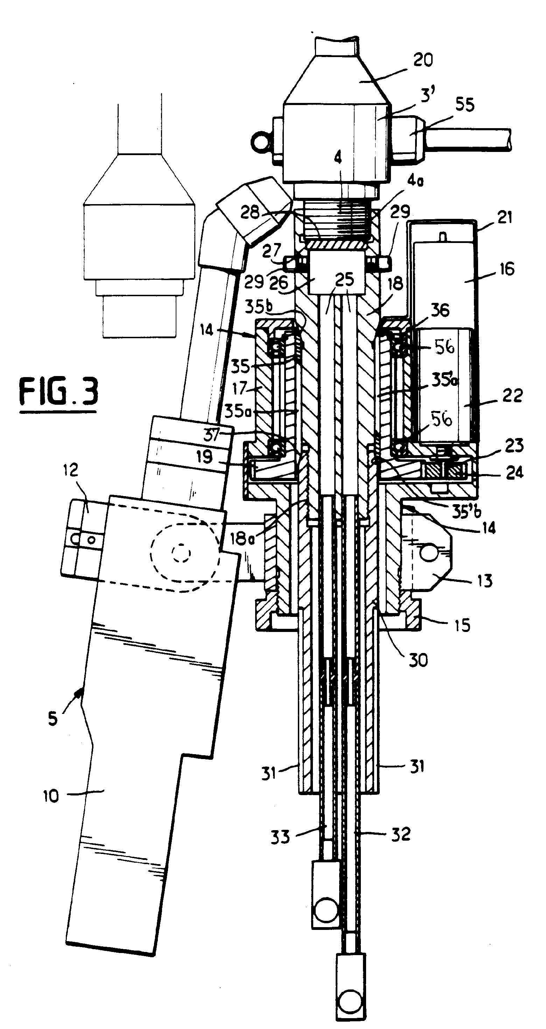

La torche de soudage 5 qui est représentée sur les figures 2 et 3 comporte un pistolet 10 de soudage MIG relié par une gaine 11 d'alimentation multiple au coffret 6. Le corps du pistolet est relié de manière articulée par l'intermédiaire d'un étrier 12 à une bride de fixation 13 qui peut être serrée sur le support 14 de la tête de soudage et maintenue en position par un écrou moleté 15.

Lors de l'utilisation de la torche de soudage, les paramètres tels que la tension et l'intensité électriques sont régulées grâce à un calculateur, de manière à obtenir le meilleur point de fonctionnement possible. Ce procédé de régulation du soudage MIG est généralement désigné par soudage "MIG SYNERGIE" par les spécialistes.

Le pistolet de soudage 10 peut être placé et bloqué dans une position inclinée telle que représentée sur les figures 2 et 3 permettant d'effectuer le soudage au niveau de la zone de raccordement entre la canne 4 et l'extrémité de la manchette 3.

Le support 14 de la torche de soudage comporte une partie inférieure sur laquelle est fixée la bride d'accrochage 13 du pistolet de soudage et une partie supérieure assurant le montage rotatif et l'entraînement en rotation orbitale du pistolet de soudage.

Cette partie supérieure comporte un élément de forme tubulaire 19 dont la partie inférieure est usinée pour constituer une roue dentée.

Cet élément tubulaire 19 est lui-même fixé, de la manière qui sera décrite plus loin, sur un arbre creux 18 raccordé à l'extrémité de la canne chauffante 4.

La partie mobile du support 14 du pistolet de soudage est montée rotative autour de l'axe de l'arbre creux 18 confondu avec l'axe de la canne 4 de la manchette 3, par l'intermédiaire de deux paliers à billes 56. Cette partie mobile comporte, en particulier, une pièce tubulaire 17 solidaire de la partie inférieure du support 14 portant la torche de soudage et un moteur électrique 16 placé à l'intérieur d'un capot de protection 21. Le moteur 16 est associé à un codeur de position 22 et comporte un axe de sortie 23 sur lequel est calé un pignon 24 engrènant avec la roue dentée constituant la partie inférieure de l'élément tubulaire 19.

La mise en rotation du moteur 16 permet de faire décrire un mouvement orbital au support 14 du pistolet de soudage, autour de l'axe 20, de la manchette 3 et de la canne 4.

La canne 4 comporte, de manière connue, dans sa partie saillante par rapport à l'extrémité de la manchette 3, une partie filetée 4a.

L'arbre creux 18 comporte, à son extrémité, une partie taraudée correspondante qui peut être engagée sur la partie filetée 4a de la canne lorsque celle-ci est reliée de manière provisoire par des points de soudure à la manchette 3.

L'arbre 18 comporte deux canaux longitudinaux 25 débouchant à la partie supérieure de l'arbre 18 dans une cavité 26 séparée de la partie supérieure taraudée de l'arbre 18 par une gorge 27 dans laquelle est placé un bouchon de fermeture 28, au moment de la fixation de l'arbre à l'extrémité de la canne 4.

L'arbre 18 comporte également deux pions 29 de direction radiale diamétralement opposés et légèrement saillants par rapport à la surface extérieure de l'arbre 18.

L'arbre 18 comporte, à sa partie inférieure, un filetage 18a sur lequel vient s'engager l'extrémité d'un écrou 30.

Pour effectuer le montage du dispositif de soudage sur une canne 4 de remplacement du pressuriseur, après soudage provisoire par points par procédé TIG de cette canne sur la manchette 3, on engage et on visse l'arbre 18 sur la partie filetée 4a de la canne saillante par rapport à la manchette 3.

Un outil de forme tubulaire de grande longueur comportant des encoches à sa partie supérieure qui viennent s'engager sur les pions 29 permet de réaliser le blocage de l'arbre 18.

Le bouchon de fermeture 28 est intercalé et serré entre l'épaulement limitant la gorge 27 et l'extrémité inférieure de la canne 4.

L'écrou 30 est assemblé à la partie inférieure 18a de l'arbre 18, avant son montage sur la canne. L'écrou 30 comporte des lumières longitudinales 31 permettant l'engagement d'un outil assurant le vissage ou le dévissage de l'écrou 30 sur la partie inférieure de l'arbre 18.

Des tubes de circulation d'eau de refroidissement 32 et 33 sont fixés à l'intérieur de l'écrou 30 et engagés par leur partie supérieure, à l'intérieur des canaux 25, au moment du montage de l'écrou 30 sur l'arbre 18.

Comme il est visible sur la figure 2, les tubes 32 et 33 sont reliés à des tuyaux flexibles 32′ et 33′ respectivement permettant d'assurer une circulation d'eau à l'intérieur de l'arbre creux 18, jusqu'à la cavité 26 fermée par le bouchon 28. Le refroidissement de l'extrémité inférieure de la canne 4 et de la zone dans laquelle on effectue la soudure de cette canne 4 sur la manchette 3 est assuré par conduction par l'intermédiaire de la partie supérieure de l'arbre 18 et du bouchon 28.

Le montage de la torche de soudage sur l'arbre 18 est assuré par l'intermédiaire d'une pince 35 constituée par une pièce tubulaire comportant des fentes 35a, 35′a de direction longitudinale sur toute son épaisseur et sur une partie substantielle de sa longueur, dans sa partie supérieure et dans sa partie inférieure.

La pince tubulaire 35 présente un diamètre intérieur sensiblement égal au diamètre extérieur de la partie courante de l'arbre 18 autour de laquelle est engagé l'élément tubulaire 19 du support 14 du pistolet de soudage 10.

La pince 35 comporte de plus à ses extrémités des portées tronconiques 35b et 35′b destinées à venir s'engager respectivement sur une partie tronconique 36 de l'arbre 18 et sur une extrémité supérieure tronconique 37 de l'écrou 30.

La pince tubulaire 35 est mise en place sur la partie correspondante de l'arbre 18 avant son montage et avant l'engagement de l'écrou 30 sur la partie taraudée 18a.

L'arbre 18 muni de la pince de serrage 35 et de l'écrou 30 est alors fixé à l'extrémité de la canne 4 comme expliqué précédemment.

L'écrou 30 est dans sa position dévissée correspondant à la position de rétraction radiale de la pince 35.

Le montage de la torche de soudage sur l'arbre 18 est effectué en engageant le support 14 sur l'ensemble constitué par l'écrou 30 et l'arbre 18, par le bas, les tuyauteries 32′ et 33′ n'étant pas reliées aux tubes 32 et 33.

L'élément tubulaire 19 est mis en place autour de la pince 35 dont l'expansion radiale et le serrage sont réalisés par vissage de l'écrou 30. La torche de soudage est alors solidaire de l'arbre 18 et de la canne 4.

La position du pistolet de soudage MIG 10 est réglée grâce à la fixation articulée de l'étrier 12 sur la bride 13. La position définitive de service du pistolet 10 permettant de réaliser le joint de soudure entre la canne 4 et l'extrémité inférieure de la manchette 3 est représentée sur les figures 2 et 3.

Lors de la mise en place du support 14 de la torche de soudage, son positionnement axial est réglé de manière à placer la torche de soudage dans sa position de travail grâce à une cale 38 mise en butée sur la partie supérieure du support 14 d'une part et sur l'extrémité inférieure de la manchette 3 d'autre part. Lorsque la fixation de la torche de soudage par serrage de l'écrou 30 est réalisée, on enlève la cale de réglage 38 qui a servi au positionnement de l'extrémité du pistolet de soudage 10, en fonction de la position de l'extrémité inférieure de la manchette 3.

Les tubes 32 et 33 du circuit de refroidissement de la canne et de la manchette sont reliés aux extrémités des tuyauteries souples 32′ et 33′ reliées, à l'intérieur du coffret d'alimentation 6, à des ajutages d'un circuit d'alimentation d'eau.

La gaine souple 11 reliée au pistolet de soudage 10 assure le passage du fil de soudage en métal d'apport constituant l'électrode et d'une tuyauterie d'alimentation du pistolet 10 en gaz inerte.

Le coffret 6 est monté sur le plateau fixe 41 d'un chariot 40 par l'intermédiaire d'un moteur 43 et d'un réducteur 44 à renvoi d'angle.

Le plateau 41 est monté sur des roues de transport 42 et comporte trois vérins hydrauliques tels que 45 permettant la stabilisation et le réglage en hauteur du plateau 41, pour tenir compte des différences d'altitude des extrémités inférieures des différentes manchettes 3 du pressuriseur.

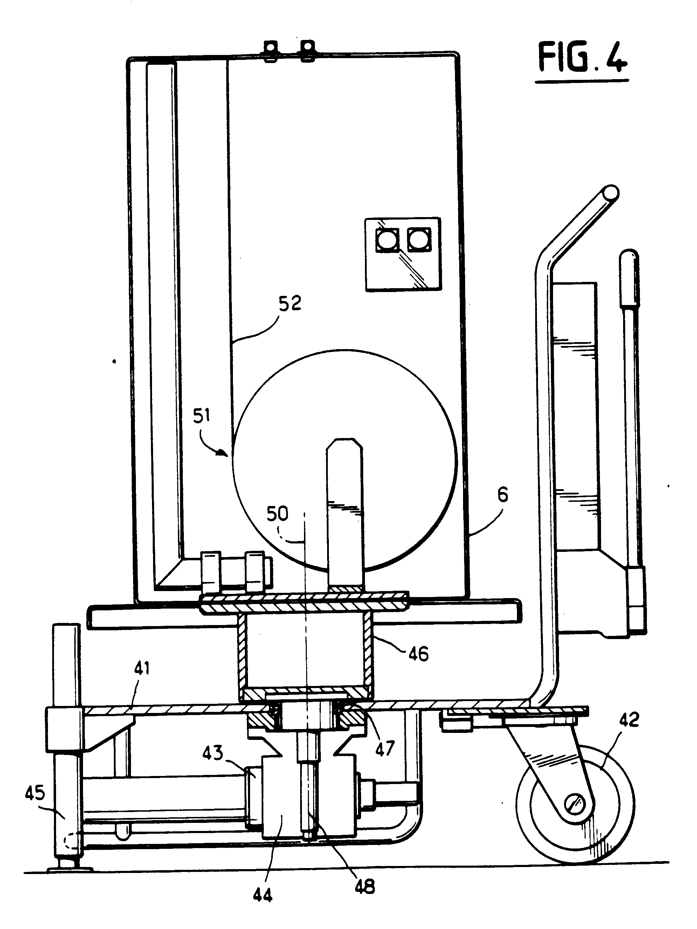

Comme il est visible sur la figure 4, le coffret 6 repose, par l'intermédiaire d'un socle 46, sur une butée à billes 47. L'axe de sortie du motoréducteur 43, 44 est relié au socle 46 de manière à mettre en rotation le coffret 6 autour d'un axe vertical 50.

Pour effectuer la soudure orbitale d'une canne chauffante 4 à l'extrémité d'une manchette 3, on met en place le plateau fixe 41 de manière que l'axe de rotation 50 du coffret 6 soit sensiblement dans le prolongement de l'axe 20 de la canne 4 et de la manchette 3 sur laquelle on effectue le soudage orbital.

Le coffret 6 renferme en particulier un dérouleur de fil motorisé 51 comportant une bobine sur laquelle est enroulé le fil de soudage 52.

La vitesse de déroulement et d'alimentation du fil est réglée de manière à assurer un approvisionnement régulier et satisfaisant de la zone de soudure en métal d'apport, pendant le soudage orbital.

En outre, l'ensemble motoréducteur 43, 44 comporte un codeur dont les indications permettent d'assurer, pendant le soudage, une rotation parfaitement synchrone du coffret 6 et de la torche de soudage 5 dont la rotation assurée par le moteur 16 est contrôlée par le codeur 22.

On assure ainsi un déplacement en rotation simultanée de la tête de soudage et de ses moyens d'alimentation en fil de soudage et en gaz inerte.

Les tubes d'alimentation d'eau 32 et 33 sont montés libres en rotation à l'intérieur de l'écrou 30 et de l'arbre 18.

Le plateau fixe 41 du coffret 6 porte un bloc de commande 54 dont le tableau est accessible sur l'une de ses faces, pour assurer le déplacement, la mise en place et les différentes fonctions du coffret d'alimentation 6.

Pour assurer le remplacement d'une canne de chauffage défectueuse, après tronçonnage de la manchette correspondante au-dessus de la soudure de raccordement à la canne, on extrait cette canne et on introduit une canne de remplacement, après avoir effectué un nettoyage de l'extrémité découpée de la manchette.

Le positionnement de la canne chauffante est contrôlé et on assure la mise en place provisoire de la canne par quelques points de soudage TIG dans la zone de jonction entre la canne et l'extrémité de la manchette.

On effectue un nouveau contrôle de position de la canne puis on visse à l'extrémité de cette canne un ensemble constitué par un arbre creux 18 sur lequel est engagé un écrou 30 avec intercalation d'un bouchon de fermeture 28 entre l'extrémité de l'arbre 18 et l'extrémité inférieure de la canne de remplacement.

On engage le support 14 d'un pistolet de soudage MIG 10 sur l'arbre 18 en réglant sa position axiale grâce à une cale 38. On réalise alors la fixation du support 14 et du pistolet 10 sur l'arbre 18 par vissage de l'écrou 30. On enlève la cale de réglage 38 et on place le coffret d'alimentation 6 porté par le support 41, à l'aplomb de la manchette 3 sur laquelle on doit réaliser le soudage. On effectue un réglage en position du coffret 6, aussi bien dans le plan horizontal que dans la direction verticale avant de le fixer en position grâce aux vérins hydrauliques 45.

On effectue les raccordements nécessaires entre le pistolet de soudage et le coffret d'alimentation puis on commande le démarrage de l'opération de soudage grâce aux tableaux de commande 7 et 54.

Le soudage se déroule de manière automatique, la torche de soudage et le coffret 6 tournant de manière synchrone autour de l'axe de la canne. Le soudage est effectué en une seule passe, avec un léger recouvrement, la torche de soudage effectuant une rotation un peu supérieure à 360° autour de l'axe commun à la canne et à la manchette.

L'ensemble du cycle de soudage est effectué sans aucun contrôle intermédiaire, l'arrêt de la torche de soudage et la coupure du courant de soudage étant commandés automatiquement et suivis d'une inversion du sens de rotation des moteurs d'entraînement de la torche de soudage et du coffret d'alimentation, pour ramener ces éléments dans leur position initiale.

Pendant le soudage, la manchette 3 et la canne 4 sont mises à la masse grâce à un collier de contact 55 sur lequel est soudé un conducteur.

Le cordon de soudure est déposé dans un espace torique à section triangulaire situé en-dessous de l'extrémité de la manchette qui a été découpée pour le démontage de la canne défectueuse.

Par rapport au soudage TIG qui nécessite de régler avec précision la position et l'orientation du plan défini par l'électrode en tungstène et le fil fusible, le soudage MIG présente l'avantage d'éviter un tel réglage de réalisation délicate qui doit de plus être modifié à chaque passe.

Le procédé suivant l'invention permet de réaliser le remplacement d'une canne chauffante d'un pressuriseur d'un réacteur nucléaire à eau sous pression de manière simple, sûre et rapide et sans utiliser d'outillage complexe et encombrant. Le fait de diminuer considérablement le temps d'intervention pour le remplacement d'une canne chauffante présente un très grand intérêt puisque cette opération doit être réalisée dans une zone fortement irradiée.

L'invention ne se limite pas au mode de réalisation qui a été décrit.

C'est ainsi qu'on peut imaginer d'utiliser un pistolet de soudage MIG de forme quelconque, de réaliser le montage de ce pistolet d'une manière différente de celle qui a été décrite et d'assurer le refroidissement de la zone de soudure par des moyens différents de ceux qui ont été mentionnés.

Dans certains cas l'extrémité de la canne chauffante ne comporte pas de filetage, il est alors nécessaire de prévoir des moyens de fixation du support de la torche de soudage adaptés à la forme de l'extrémité de la canne chauffante. Ces moyens peuvent être constitués par exemple par des pinces ou mandrins ou tout autre moyen de serrage mécanique.

L'invention s'applique au remplacement des cannes chauffantes défectueuses d'un pressuriseur d'un réacteur nucléaire à eau sous pression.

## Revendications

1. Procédé de remplacement d'une canne chauffante (4) d'un pressuriseur d'un réacteur nucléaire à eau sous pression introduite et fixée par soudage dans une manchette (3) solidaire de l'enveloppe du pressuriseur au niveau d'une ouverture de traversée de cette enveloppe, consistant à tronçonner la manchette (3) au-dessus de la soudure de raccordement de la canne chauffante (4), à extraire la canne chauffante (4), à mettre en place une canne chauffante de remplacement (4), à fixer cette canne de manière provisoire sur la manchette et à réaliser une soudure annulaire continue de jonction entre la canne chauffante (4) et la manchette (3), caractérisé par le fait que, pour réaliser la soudure continue entre la canne (4) et la manchette (3), on fixe un arbre (18) de forme tubulaire sur une extrémité de la canne chauffante saillante par rapport à la manchette (3) et dans son prolongement, on engage et on fixe sur l'arbre (18), en position de soudage, un dispositif de soudage comportant un support tubulaire (14) et une torche de soudage orbital sous gaz inerte avec électrode en métal fusible montée rotative autour de l'axe du support (14) confondu avec l'axe (20) de la canne chauffante (4), munie d'un moyen moteur de mise en rotation (16) et associée à un dérouleur de fil de soudage (51) monté rotatif sur un socle fixe (41) autour de l'axe (20) de la canne chauffante (4) et muni d'un moyen moteur de mise en rotation et qu'on met en rotation de manière synchrone la torche de soudage (5) et le dérouleur (51) autour de l'axe (20) de la canne chauffante (4), de manière à réaliser le soudage en une seule passe, sur toute la périphérie de la canne chauffante (4) et de la manchette (3).

2. Procédé suivant la revendication 1, caractérisé par le fait que, pour réaliser le soudage de la canne (4) sur la manchette (3), on fait effectuer une rotation à la torche de soudage (5) et au dérouleur (6) d'une amplitude supérieure à 360°, pour assurer un certain recouvrement du cordon de soudure.

3. Procédé suivant la revendication 2, caractérisé par le fait qu'après avoir réalisé la soudure continue de la canne (4) et de la manchette (3) on fait effectuer une rotation dans le sens inverse à la torche de soudage (5) et au dérouleur (51), pour les ramener dans leur position initiale.

4. Procédé suivant l'une quelconque des revendications 1, 2 et 3, caractérisé par le fait que la mise en place, la fixation provisoire et le soudage continu de la canne de remplacement (4) sont effectués directement après tronçonnage de la manchette (3), sans opération intermédiaire d'usinage.

5. Dispositif de soudage pour le remplacement d'une canne chauffante (4) d'un pressuriseur d'un réacteur nucléaire à eau sous pression introduite et fixée par soudage dans une manchette (3) solidaire de l'enveloppe (1) du pressuriseur au niveau d'une ouverture de traversée de cette enveloppe (1), le remplacement consistant à tronçonner la manchette (3) au-dessus de la soudure de raccordement de la canne chauffante (4), à extraire la canne chauffante (4), à mettre en place une canne chauffante de remplacement (4), à fixer cette canne de manière provisoire sur la manchette (3) et à réaliser une soudure annulaire continue de jonction entre la canne chauffante (4) et la manchette (3), caractérisé par le fait qu'il comporte :
- un arbre (18) comportant un moyen de raccordement à une partie d'extrémité de la canne chauffante (4) saillante par rapport à la manchette (3),
- un support (14) de forme tubulaire engageable sur l'arbre (18) et muni de moyens de fixation et de serrage sur l'arbre (30, 35) et comportant une partie mobile montée rotative sur la partie fixe autour de l'axe (20) de la canne chauffante (4) et de la manchette (3),
- un pistolet de soudage (10) porté par la partie mobile du support (14),
- un moyen moteur (16, 22) d'entraînement en rotation de la partie mobile du support (14) par rapport à la partie fixe,
- et un ensemble d'alimentation comportant un dérouleur de fil de soudage monté mobile en rotation sur un support fixe (41), autour de l'axe (20) de la canne chauffante (4) et de la manchette (3).

6. Dispositif suivant la revendication 5, caractérisé par le fait que les moyens de fixation (30, 35) de la partie fixe du support (14) sur l'arbre (18) sont constitués par une pince de forme tubulaire (35) comportant des fentes longitudinales (35a) et des parties d'extrémité ayant une surface intérieure tronconique et par un écrou (30) comportant une partie taraudée engagée sur une partie filetée (18a) de l'arbre (18), pour réaliser l'expansion diamétrale de la pince (35) et la fixation du support (14) par vissage de l'écrou (30).

7. Dispositif suivant la revendication 6, caractérisé par le fait que l'une des portées tronconiques intérieures (35b) de la pince tubulaire (35) est en prise avec une surface tronconique (36) de l'arbre (18) et l'autre portée tronconique (35′b) avec une partie d'extrémité tronconique (37) de l'écrou (30).

8. Dispositif suivant l'une quelconque des revendications 5 à 7, dans le cas où l'extrémité de la manchette chauffante (4) comporte une partie filetée (4a), caractérisé par le fait que l'arbre (18) comporte une partie d'extrémité taraudée venant en prise avec la partie filetée (4a) de la manchette (4), pour sa fixation par vissage.

9. Dispositif suivant la revendication 8, caractérisé par le fait que l'arbre (18) comporte de plus des pions (29) de direction radiale pour l'engagement d'un outil de serrage en forme de chemise tubulaire comportant des crans venant s'engager sur des extrémités saillantes des pions (29) solidaires de l'arbre (18).

10. Dispositif suivant l'une quelconque des revendications 5 à 9, caractérisé par le fait que l'arbre (18) et l'écrou (30) comportent des passages d'eau de refroidissement (32, 33, 25) dans le prolongement les uns des autres débouchant dans une cavité (26) à la partie supérieure de l'arbre (18) et qu'un bouchon de fermeture (28) de la cavité (26) est intercalé entre une partie interne (27) de l'arbre (18) et l'extrémité de la canne chauffante (4).

11. Dispositif suivant l'une quelconque des revendications 5 à 10, caractérisé par le fait que le moyen moteur d'entraînement en rotation de la partie mobile du support (14) du pistolet de soudage (10) est constitué par un moteur (16) porté par la partie mobile du support (14) dont l'axe porte un pignon (23) engrènant avec une roue dentée solidaire de la partie fixe du support (14) fixé sur l'arbre (18), de manière que le pignon (23) et la partie mobile du support (14) se déplacent dans un mouvement orbital autour de l'axe (20) de la canne chauffante (4) et de la manchette (3).

12. Dispositif suivant l'une quelconque des revendications 5 à 11, caractérisé par le fait que le dérouleur de fil de soudage (51) est monté à l'intérieur d'un coffret d'alimentation (6) porté par un socle (46) monté rotatif autour d'un axe vertical (50) sur un support fixe (41).

13. Dispositif suivant la revendication 12, caractérisé par le fait que le socle (46) est monté rotatif sur une butée à billes (47) et solidaire d'un arbre (48) entraîné en rotation par un motoréducteur (43, 44), pour le déplacement synchrone en rotation du socle (46) du coffret (6) et du dérouleur (51), par rapport au déplacement en rotation de la torche de soudage (5).

14. Dispositif suivant l'une quelconque des revendications 5 à 13, caractérisé par le fait que le support fixe (41) est monté réglable en hauteur, par l'intermédiaire de vérins hydrauliques (45).

15. Dispositif suivant l'une quelconque des revendications 5 à 14, caractérisé par le fait que le dérouleur (51) est constitué par une bobine reliée à un moteur d'entraînement en rotation sur laquelle est enroulé le fil de soudage (52).

## Patentansprüche

1. Verfahren zum Ersetzen einer Heizung (4) eines Druckerzeugers eines Druckwasserkernreaktors, die in eine am Mantel des Druckerzeugers an einer Durchtrittsöffnung dieses Mantels angebrachte Manschette (3) eingesetzt und durch Schweißen befestigt ist, bei dem man die Manschette (3) oberhalb der Schweißverbindung mit der Heizung (4) abtrennt, die Heizung (4) herauszieht, eine Austausch-Heizung (4) in Position bringt, diese Heizung provisorisch an der Manschette befestigt und eine durchgehende ringförmige Schweißung ausführt, um die Heizung (4) mit der Manschette (3) zu verbinden, dadurch **gekennnzeichnet**, daß man zur Herstellung der durchgehenden Schweißverbindung zwischen der Heizung (4) und der Manschette (3) eine rohrförmige Spindel (18) an einem in bezug auf die Manschette (3) und in ihrer Verlängerung vorspringenden Ende der Heizung befestigt, auf der Spindel (18) in der Schweißposition eine Schweißvorrichtung ansetzt und befestigt, die einen rohrförmigen Träger (14) und einen umlaufenden Inertgas-Schweißbrenner mit Elektrode aus schmelzbarem Metall aufweist, der um die mit der Achse (20) der Heizung (4) zusammenfallende Achse des Trägers (14) drehbar ist und einen Drehantrieb (16) aufweist und dem eine Schweißdraht-Abrolleinrichtung (51) zugeordnet ist, die um die Achse (20) der Heizung (4) drehbar auf einem festen Sockel (41) montiert und mit einem Drehantrieb versehen ist, und daß man den Schweißbrenner (5) und die Abrolleinrichtung (51) synchron um die Achse (20) der Heizung (4) dreht, um die Schweißung in einem einzigen Durchgang auf dem gesamten Umfang der Heizung (4) und der Manschette (3) auszuführen.

2. Verfahren nach Anspruch 1, dadurch **gekennzeichnet**, daß man, um die Heizung (4) an die Manschette (3) anzuschweißen, den Schweißbrenner (5) und die Abrolleinrichtung (6) um einen Drehwinkel von mehr als 360° dreht, um eine gewisse Überlappung der Schweißnaht sicherzustellen.

3. Verfahren nach Anspruch 2, dadurch **gekennzeichnet**, daß man, nachdem die Heizung (4) mit der Manschette (3) verschweißt ist, den Schweißbrenner (5) und die Abrolleinrichtung (51) in Gegenrichtung dreht, um sie in ihre Ausgangstellung zurück zu bewegen.

4. Verfahren nach irgendeinem der Ansprüche 1 bis 3, dadurch **gekenn****zeichnet**, daß das Positionieren, die provisorische Befestigung und die durchgehende Schweißung der Austausch-Heizung (4) ohne Zwischenbearbeitungsschritt unmittelbar nach dem Abtrennen der Manschette (3) erfolgen.

5. Schweißvorrichtung zum Ersetzen einer Heizung (4) eines Druckerzeugers eines Druckwasserkernreaktors, die in eine an dem Mantel (1) des Druckerzeugers an einer Durchtrittsöffnung dieses Mantels (1) angebrachte Manschette (3) eingesetzt und durch Schweißen befestigt ist, wobei das Ersetzen dadurch erfolgt, daß man die Manschette (3) oberhalb der Schweißverbindung mit der Heizung (4) abtrennt, die Heizung (4) herauszieht, eine Austausch-Heizung (4) in Position bringt, diese Heizung provisorisch an der Manschette (3) befestigt und eine durchgehende ringförmige schweißung zur Verbindung der Heizung (4) mit der Manschette (3) ausführt, dadurch **ge****kennzeichnet**, daß sie aufweist:
- eine Spindel (18), die ein Mittel zum Anschluß an einen in bezug auf die Manschette (3) vorspringenden Endbereich der Heizung (4) aufweist,
- einen auf die Spindel (18) aufschiebbaren rohrförmigen Träger (14), der mit Mitteln (30, 35) zur Befestigung und zum Festspannen auf der Spindel versehen ist und einen um die Achse (20) der Heizung (4) und der Manschette (3) drehbar auf dem festen Teil montierten beweglichen Teil aufweist,
- eine an dem beweglichen Teil des Trägers (14) gehaltene Schweißpistole (10),
- Antriebsmittel (16, 22) zum Drehantrieb des beweglichen Teils des Trägers (14) in bezug auf den festen Teil,
- und eine Versorgungseinheit mit einer Schweißdraht-Abrolleinrichtung, die um die Achse (20) der Heizung (4) und der Manschette (3) drehbar auf einem festen Support (41) montiert ist.

6. Vorrichtung nach Anspruch 5, dadurch **gekennzeichnet**, daß die Mittel (30, 35) zur Befestigung des festen Teils des Trägers (14) auf der Spindel (18) gebildet werden durch eine rohrförmige Klemme (35) mit Längsschlitzen (35a) und Endbereichen, die eine kegelstumpfförmige innere Oberfläche aufweisen, und durch eine Mutter (30), die einen mit einem Gewindeabschnitt (18a) der Spindel (18) in Eingriff stehenden Innengewindeabschnitt aufweist, um die diametrale Spreizung der Klemme (35) und die Befestigung des Trägers (14) durch Festschrauben der Mutter (30) zu bewirken.

7. Vorrichtung nach Anspruch 6, dadurch **gekennzeichnet**, daß einer (35b) der kegelstumpfförmigen inneren Bereiche der rohrförmigen Klemme (35) mit einer kegelstumpfförmigen Oberfläche (36) der Spindel (18) und der andere kegelstumpfförmige Bereich (35′b) mit einem kegelstumpfförmigen Endabshnitt (37) der Mutter (30) in Eingriff steht.

8. Vorrichtung nach irgendeinem der Ansprüche 5 bis 7, für den Fall, daß das Ende der Heizung (4) einen Gewindeabschnitt (4a) aufweist, dadurch **gekennzeichnet**, daß die Spindel (18) einen mit Innengewinde versehenen Endabschnitt aufweist, der zu ihrer Schraubbefestigung mit dem Gewindeabschnitt (4a) der Heizung (4) in Eingriff tritt.

9. Vorrichtung nach Anspruch 8, dadurch **gekennzeichnet**, daß die Spindel (18) außerdem radiale Zapfen (29) aufweist, für den Eingriff eines Spannwerkzeugs in der Form einer rohrförmigen Hülse, die mit Aussschnitten versehen ist, die mit vorspringenden Enden der an der Spindel (18) sitzenden Zapfen (29) in Eingriff treten.

10. Vorrichtung nach irgendeinem der Ansprüche 5 bis 9, dadurch **gekenn****zeichnet,** daß die Spindel (18) und die Mutter (30) in Verlängerung zueinander angeordnete Kühlwasserkanäle (32, 33, 25) aufweisen, die in einem Hohlraum (26) im oberen Teil der Spindel (18) münden, und daß ein Verschlußstopfen (28) des Hohlraums (26) zwischen dem inneren Teil (27) der Spindel (18) und dem Ende der Heizung (4) eingefügt ist.

11. Vorrichtung nach irgendeinem der Ansprüche 5 bis 10, dadurch **gekenn****zeichnet**, daß die Drehantriebsmittel für den beweglichen Teil des Trägers (14) für die Schweißpistole (10) gebildet werden durch einen Motor (16), der an dem beweglichen Teil des Trägers (14) gehalten ist und dessen Achse ein Ritzel (23) trägt, das mit einem an dem auf der Spindel (18) befestigten festen Teil des Trägers (14) sitzenden Zahnrad kämmt, so daß das Ritzel (23) und der bewegliche Teil des Trägers (14) um die Achse (20) der Heizung (4) und der Manschette (3) umlaufen.

12. Vorrichtung nach irgendeinem der Ansprüche 5 bis 11, dadurch **gekenn****zeichnet**, daß die Schweißdraht-Abrolleinrichtung (51) im Inneren eines Versorgungsgehäuses (6) montiert ist, das an einem Sockel (46) gehalten ist, der um eine vertikale Achse (50) drehbar auf einem festen Support (41) montiert ist.

13. Vorrichtung nach Anspruch 12, dadurch **gekennzeichnet**, daß der Sockel (46) drehbar auf einem Axialkugellager (47) montiert ist und fest mit einer Welle (48) verbunden ist, die für die synchrone Drehbewegung des Sockels (46) des Gehäuses (6) und der Abrolleinrichtung (51) in bezug auf die Drehbewegung des Schweißbrenners (5) durch einen Getriebemotor (43, 44) in Drehung versetzt wird.

14. Vorrichtung nach irgendeinem der Ansprüche 5 bis 13, dadurch **gekenn****zeichnet**, daß der feste Support (41) durch Hydraulikzylinder (45) höhenverstellbar ist.

15. Vorrichtung nach irgendeinem der Ansprüche 5 bis 14, dadurch **gekenn****zeichnet**, daß die Abrolleinrichtung (51) durch eine Spule gebildet wird, die mit einem Drehantriebsmotor verbunden ist und auf die der Schweißdraht (52) aufgewickelt ist.

## Claims

1. Method for replacing a heating rod (4) in a pressuriser in a pressurised-water nuclear reactor inserted and fixed by welding in a collar (3) secured to the pressuriser casing in the vicinity of an opening passing through this casing, consisting of cutting the collar (3) above the weld connecting the heating rod (4), extracting the heating rod (4), fitting a replacement heating rod (4), fixing this rod temporarily to the collar and effecting a continuous annular joining weld between the heating rod (4) and the collar (3), characterised in that, to effect the continuous weld between the rod (4) and the collar (3), a tubular-shaped shaft (18) is fixed to one end of the heating rod projecting with respect to the collar (3) and in line with it, a welding device is engaged and fixed to the shaft (18), in the welding position, the said welding device having tubular support (14) and a consumable-electrode inert-gas orbital welding torch mounted so as to rotate about the axis of the support (14) coinciding with the axis (20) of the heating rod (4), provided with drive means for rotating it (16) and associated with a device for unwinding welding wire (51) mounted so as to rotate on a fixed base (41) about the axis (20) of the heating rod (4) and provided with a drive means for rotating it, and in that the welding torch (5) and the unwinding device (51) are set in rotation synchronously about the axis (20) of the heating rod (4), so as to effect the welding in a single pass, over the entire periphery of the heating rod (4) and of the collar (3).

2. Method according to Claim 1, characterised in that, to effect the welding of the rod (4) to the collar (3), the welding torch (5) and unwinding device (6) are made to undergo a rotation of more than 360°, in order to ensure a certain overlap of the weld bead.

3. Method according to Claim 2, characterised in that, after effecting the continuous welding of the rod (4) and collar (3), the welding torch (5) and unwinding device (51) are made to rotate in the opposite direction to return them to their initial position.

4. Method according to any one of Claims 1, 2 and 3, characterised in that the fitting, temporary fixing and continuous welding of the replacement rod (4) are effected directly after cutting of the collar (3), without any intermediate machining operation.

5. Welding device for replacing a heating rod (4) in a pressuriser in a pressurised-water nuclear reactor inserted and fixed by welding in a collar (3) secured to the pressuriser casing (1) in the vicinity of an opening passing through this casing (1), the replacement consisting of cutting the collar (3) above the weld connecting the heating rod (4), extracting the heating rod (4), fitting a replacement heating rod (4), fixing this rod temporarily to the collar and effecting a continuous annular joining weld between the heating rod (4) and the collar (3), characterised in that it includes:
- a shaft (18) having a means of connection to an end part of the heating rod (4) projecting with respect to the collar (3),
- a tubular-shaped support (14) which can be engaged on the shaft (18) and is provided with means for fixing and clamping on the shaft (30, 35) and having a moving part mounted so as to rotate on the fixed part about the axis (20) of the heating rod (4) and collar (3),
- a welding gun (10) carried by the moving part of the support (14),
- a drive means (16, 22) for driving the moving part of the support (14) in rotation with respect to the fixed part,
- and a feed unit including a device for unwinding welding wire mounted so as to be movable in rotation on a fixed support (41), about the axis (20) of the heating rod (4) and collar (3).

6. Device according to Claim 5, characterised in that the means (30, 35) for fixing the fixed part of the support (14) to the shaft (18) consist of a tubular-shaped gripper (35) having longitudinal slots (35a) and end parts with a tapered internal surface and by a nut (30) having a threaded part engaged on a threaded part (18a) of the shaft (18), to effect the diametral expansion of the gripper (35) and the fixing of the support (14) by screwing of the nut (30).

7. Device according to Claim 6, characterised in that one of the internal tapered surfaces (35b) of the tubular gripper (35) is in engagement with a tapered surface (36) of the shaft (18) and the other tapered surface (35′b) with a tapered end part (37) of the nut (30).

8. Device according to any one of Claims 5 to 7, where the end of the heating rod (4) has a threaded part (4a), characterised by the fact that the shaft (18) has a threaded end part engaging with the threaded part (4a) of the rod (4), for fixing it by screwing.

9. Device according to Claim 8, characterised in that the shaft (18) also has studs (29 ) projecting radially for the engagement of a clamping tool in the form of a tubular jacket having notches engaging on projecting ends of the studs (29) fixed to the shaft (18).

10. Device according to any one of Claims 5 to 9, characterised in that the shaft (18) and nut (30) have cooling-water passages (32, 33, 25) in line with each other and opening out into a cavity (26) at the top part of the shaft (18), and in that a plug (28) for closing off the cavity (26) is interposed between an internal part (27) of the shaft (18) and the end of the heating rod (4).

11. Device according to any one of Claims 5 to 10, characterised in that the drive means for rotating the moving part of the support (14) of the welding gun (10) consists of a motor (16) carried by the moving part of the support (14), the shaft of which carries a pinion (23) meshing with a gear wheel secured to the fixed part of the support (14) fixed to the shaft (18), so that the pinion (23) and the moving part of the support (14) move in an orbital movement about the axis (20) of the heating rod (4) and collar (3).

12. Device according to any one of Claims 5 to 11, characterised in that the welding wire unwinding device (51) is mounted inside a supply cabinet (6) carried by a base (46) mounted so as to rotate about a vertical axis (50) on a fixed support (41).

13. Device according to Claim 12, characterised in that the base (46) is mounted so as to rotate on a thrust ball bearing (47) and secured to a shaft (48) driven in rotation by a geared motor (43, 44), for the synchronous rotation of the base (46) of the cabinet (6) and unwinding device (51), with respect to the rotation of the welding torch (5).

14. Device according to any one of Claims 5 to 13, characterised in that the fixed support (41) is mounted so as to be adjustable in height, by means of hydraulic jacks (45).

15. Device according to any one of Claims 5 to 14, characterised in that the unwinding device (51) consists of a reel, connected to a motor for driving in rotation, on which the welding wire (52) is coiled.
